Europäisches Patentamt

European Patent Office

Office européen des brevets

(19)

(11) Veröffentlichungsnummer: **0 118 903**
**A1**

(12) # EUROPÄISCHE PATENTANMELDUNG

(21) Anmeldenummer: **84102593.5**

(22) Anmeldetag: **09.03.84**

(51) Int. Cl.³: **C 07 C 172/00**
**B 01 J 19/12**

(30) Priorität: **10.03.83 DE 3308592**

(43) Veröffentlichungstag der Anmeldung:
**19.09.84 Patentblatt 84/38**

(84) Benannte Vertragsstaaten:
**IT**

(71) Anmelder: **Max-Planck-Gesellschaft zur Förderung der Wissenschaften e.V.**
**Bunsenstrasse 10**
**D-3400 Göttingen(DE)**

(72) Erfinder: **Braun, Michael**
**Görresstrasse 1**
**D-8058 Erding(DE)**

(72) Erfinder: **Fuss, Werner, Dr.**
**Weidachstrasse 12**
**D-8046 Garching(DE)**

(72) Erfinder: **Kompa, Karl-Ludwig, Prof. Dr.**
**Amalienstrasse 2**
**D-8045 Ismaning(DE)**

(74) Vertreter: **Weickmann, Heinrich, Dipl.-Ing. et al,**
**Patentanwälte Dipl.-Ing. H.Weickmann Dipl.-Phys.Dr.**
**K.Fincke Dipl.-Ing. F.A.Weickmann Dipl.-Chem. B. Huber**
**Dr.-Ing. H. Liska Dipl.-Phys.Dr. J. Prechtel Möhlstrasse 22**
**D-8000 München 80(DE)**

(54) **Photochemisches Verfahren zur Herstellung von Prävitamin D2 und D3 aus Ergosterin bzw. 7-Dehydrocholesterin.**

(57) Die Erfindung betrifft ein photochemisches Verfahren zur Herstellung von Prävitamin $D_2$ und $D_3$ aus 7-Dehydrocholesterin. Das Verfahren ist dadurch gekennzeichnet, daß man als Strahlungsquelle einen Laser verwendet, der

(a) ein energiereicher Laser ist, der Wellenlängen außerhalb des für die Prävitamin D-Synthese erforderlichen Bereichs besitzt, aber durch ein- oder mehrfache Raman-Verschiebung der emittierten Wellenlängen ein gepulstes Licht mit hohen Photonenausbeuten im gewünschten Wellenlängenbereich liefert,

(b) ein Laser aus der Gruppe der Excimer-Laser ist,

(c) ein Laser aus der Gruppe der Exciplex-Laser ist oder,

(d) ein Laser aus der Gruppe der Metalldampf-Laser mit Frequenzverdoppelung ist.

B e s c h r e i b u n g

Die Erfindung betrifft ein photochemisches Verfahren zur Herstellung von Prävitamin $D_2$ und $D_3$ aus 7-Dehydrocholesterin bzw. Ergosterin.

Es ist bekannt, die Prävitamine $D_2$ und $D_3$ aus 7-Dehydrocholesterin bzw. Ergosterin durch Bestrahlung zu erhalten. Diese Prävitamine lassen sich durch thermische Umlagerung in die thermisch stabileren Vitamine $D_2$ und $D_3$ überführen.

Die photochemische Synthese des Prävitamins $D_3$ aus 7-Dehydrocholesterin erfolgte bisher in technischem Maßstab durch Bestrahlung mit Quecksilberlampen (vgl. M. Fischer, Angew. Chem. 90 (1978) 17; E. Havinga, R.J. de Kock und M.P. Rappold, Tetrahedron 11 (1960) 276). Dabei tritt das Problem auf, daß das Ausgangsprodukt und das Primärprodukt (aber auch sehr viele Sekundärprodukte) im gleichen Wellenlängenbereich absorbieren. Dadurch wird die Bildung photochemischer Sekundärprodukte verursacht, die physiologisch unwirksam und zum Teil sogar schädlich sind. Die Bestrahlung muß deshalb bereits bei kleinem Umsatz abgebrochen werden; die Produkte werden abgetrennt und das Ausgangsprodukt wird für einen neuen Zyklus zurückgeführt, der zur Steigerung der Ausbeute gegebenenfalls des öfteren wiederholt wird. So überlappt z. B. das Absorptionsspektrum von Prävitamin $D_3$ vollständig mit dem von 7-Dehydrocholesterin, so daß Prävitamin $D_3$ mit zunehmendem Umsatz einen ständig wachsenden Anteil des Lichts absorbiert. Unglücklicherweise ist die Quantenausbeute der photochemischen Folgereaktion von Prävitamin $D_3$ zum Tachysterin, dem trans-isomeren Trien, größer als die Quantenausbeute seiner Bildung. Man ist deshalb gezwungen, die Belichtung von 7-Dehydrocholesterin bereits bei einem Umsatz von 30 bis 50 % abzubrechen und das Prävitamin $D_3$ zu isolieren.

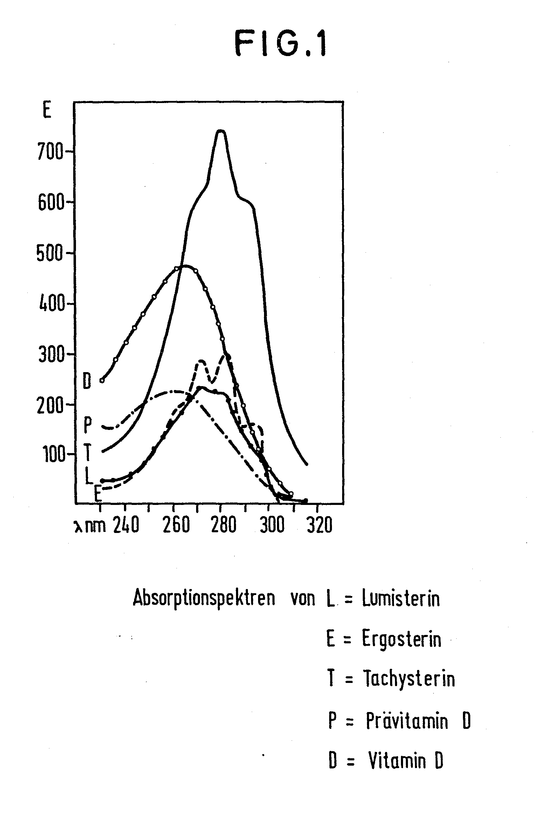

Ein weiteres Problem dieser photochemischen Synthese besteht darin, daß die Emission der Quecksilberlampe sehr schlecht auf das Spektrum des 7-Dehydrocholesterins abgestimmt ist. Die Hauptemission der Quecksilberlampe liegt bei 254 nm, einer Wellenlänge, die vor allem die Entstehung des unerwünschten Tachysterin begünstigt (siehe Fig. 1 der Zeichnung). Im günstigsten Wellenlängenbereich liegen nur drei sehr schwache Linien bei 280, 289 und 297 nm, die sich bei einer kW-Lampe zu insgesamt 8,5 Molquanten/Stunde summieren (Gesamtemission für alle Wellenlängen: 174 Molquanten/Stunde). Bei der Quantenausbeute 0,31 für die Umwandlung von 7-Dehydrocholesterin in Prävitamin $D_3$ sollten mit einer 40 kW-²lampe unter optimalen Bedingungen 8,5 x 0,31 = 2,64 Mol Prävitamin $D_3$/Stunde herstellbar sein. Das bedeutet, daß für die Synthese von 1 kg Vitamin $D_3$ eine Belichtungszeit von 1 Stunde und damit ein Energieverbrauch von 40 kWh zu erwarten ist. Der tatsächliche Energieaufwand liegt mit etwa 80 kWh/kg Vitamin $D_3$ doppelt so hoch (vgl. M. Fischer, Angew. Chem. 90 (1978) 17).

Sekundärprodukte lassen sich zwar durch Bestrahlung bei Wellenlängen, bei denen das Verhältnis der Absorptionsquerschnitte des Ausgangsprodukts zu dem des Primärprodukts am größten ist, zurückdrängen; d. h. bei Wellenlängen im Bereich von 270 bis 300 nm, und insbesondere Wellenlängen im Bereich der Adsorptionsmaxima des Ausgangsprodukts. In diesen Bereichen absorbieren aber auch die unerwünschten Nebenprodukte im Vergleich zum Primärprodukt sehr stark. Ein Maß für die zu erreichende Zusammensetzung des Gemisches ist der photostationäre
Zustand, d. h. der Zustand, den man bei ausreichend
langer Bestrahlung erreichen würde (vgl. z. B. E.
Abillon und R. Mermet-Bouvier, J. Pharm. Sci. 62 (1973)
1691; T. Kobayashi und M. Yasumura, J. Nutr. Sci.
Vitaminol 19 (1973) 123; sowie K. Pfoertner und J. P.
Weber, Helv. Chim. Acta 55 (1972) 921).

Der einzige bisher für diese Umsetzung angewandte
Laser, der im günstigen Bereich emittiert, ist ein verdoppelter Farbstofflaser (W. G. Dauben, R. B. Phillis,
and P. Jefferies, Proc. Natl. Acad. Sci. USA 79, 5115
(1982)). Allerdings ist ein solcher Laser wegen seiner
geringen Leistung für ein Verfahren im technischen Maßstab nicht geeignet. Trotz des Bedürfnisses, geeignete,
auch für technische Verfahren brauchbare Strahlungsquellen für den günstigsten Wellenlängenbereich der photochemischen Herstellung von Prävitamin $D_2$ und $D_3$ aufzufinden, konnte dieses Problem bisher nicht befriedigend
gelöst werden (vgl. z. B. W.G. Dauben, R.B. Phillips
und P. Jefferies, Proc. Natl. Acad. Sci. USA 79 (1982),
5115 rechte Spalte, letzter Absatz).

Aufgabe der vorliegenden Erfindung ist es deshalb, die
genannten Nachteile zu überwinden und ein photochemisches Verfahren zur Herstellung von Prävitamin $D_2$ und
$D_3$ aus 7-Dehydrocholesterin bereitzustellen, das einfach und mit guten Ausbeuten auch in technischem Maßstab durchführbar ist. Diese Aufgabe wird mit der vorliegenden Erfindung gelöst.

Gegenstand der Erfindung ist ein photochemisches Verfahren zur Herstellung von Prävitamin $D_2$ und $D_3$ aus Ergosterin bzw. 7-Dehydrocholesterin, das dadurch gekennzeichnet ist, daß man als Strahlungsquelle einen Laser verwendet, der

(a) ein energiereicher Laser ist, der Wellenlängen außerhalb des für die Prävitamin D-Synthese erforderlichen Bereichs besitzt, aber durch ein- oder mehrfache Raman-Verschiebung der emittierten Wellenlängen ein gepulstes Licht mit hohen Photonenausbeuten im gewünschten Wellenlängenbereich liefert,

(b) ein Laser aus der Gruppe der Excimer-Laser ist,

(c) ein Laser aus der Gruppe der Exciplex-Laser oder

(d) ein Laser aus der Gruppe der Metalldampf-Laser mit Frequenzverdoppelung ist.

Mit den erfindungsgemäß verwendeten Lasern werden erstmals Strahlungsquellen eingesetzt, die überraschenderweise sehr leistungsfähige Lichtquellen im optimalen Wellenlängenbereich der photochemischen Prävitamin D-Synthese darstellen und mit der die bisher auftretenden Probleme und Nachteile überwunden werden können. Sie eignen sich deshalb auch gut als Lichtquellen für die Prävitamin D-Synthese in technischem Maßstab. Im Rahmen der Erfindung werden unter der Bezeichnung "Prävitamin $D_2$ und $D_3$" alle solchen Prävitamin D-Substanzen verstanden, welche die gleichen spectralen Eigenschaften wie Prävitamin $D_2$ und $D_3$ selbst aufweisen.

Die erfindungsgemäßen Strahlungsquellen können sowohl in einem einstufigen photochemischen Verfahren, das von 7-Dehydrocholesterin ausgehend direkt zum Prävitamin D führt, oder aber auch in einem zweistufigen Verfahren eingesetzt werden. Nach dem zweistufigen Verfahren wird zunächst Tachysterin gebildet; dieses hat als einzige Komponente des erhaltenen Reaktionsgemisches auch noch bei Wellenlängen $> 300$ nm eine nennenswerte Absorption und kann bei einer zweiten Bestrahlung mit einer langwelligeren Lichtquelle (vgl. W.G. Dauben und R.B.
Phillips, JACS 104 (1982) 335) oder auch durch eine
Triplettsensibilisierung (vgl. z. B. S.C. Eyley und
D.H. Williams, J.C.S. Chem. Comm. (1975) 858; M. Denny
und R.S.H. Liu, Nouv. J. de Chimie 2 (1978) 637) in
Prävitamin D überführt werden. Die erfindungsgemäßen
Laser eignen sich dabei im Wellenlängenbereich zwischen
270 und 295 nm überraschend gut als technisch brauchbare Strahlungsquelle für die erste Stufe. Durch den
höheren Anteil des gewünschten Produktes wird die wegen
der geringen Absorptionskoeffizienten aufwendigere
zweite Stufe wesentlich verkürzt.

Als erfindungsgemäße Laser (a) werden energiereiche
Laser verwendet, deren Wellenlänge außerhalb des für
die Prävitamin D-Synthese erforderlichen optimalen Bereichs liegt, die aber durch ein- oder mehrfache Raman-
Verschiebung der emittierten Wellenlängen ein gepulstes
Licht mit hohen Photonenausbeuten im gewünschten
Wellenlängenbereich liefern. Von diesen Lasern können
sowohl solche verwendet werden, die von zu kurzen Wellenlängen durch Raman-Verschiebung in den längerwelligen Bereich verschoben werden (sogenannte Stokes-Raman-
Laser), als auch zu langwellige Laser, die in den
kürzerwelligen Bereich verschoben werden (sogenannte
Anti-Stokes-Raman-Laser). Typische Beispiele, mit denen
gute Ergebnisse erhalten werden können, sind Stokes-
Raman-verschobene KrF- und ArF-Laser und anti-Stokes-
Raman-verschobene XeCl-Laser. Die nach diesen Prinzip
arbeitenden Laser sind wegen der inzwischen erreichten
hohen Wirkungsgrade (z. B. 70 % Energiekonversion in
die zweite Stokes-Wellenlänge nach J. N. Holliday, Opt.
Lett. 8, 12 (1983)) für eine Darstellung im technischen
Maßstab durchaus geeignet.

Geeignete Raman-Medien, durch die z. B. die Laser KrF (248 nm), ArF (193 nm) oder XeCl (308 nm) ein- oder mehrstufig verschoben werden, sind z. B. $H_2$, HD, $D_2$, $CH_4$ und $N_2$. Besonders gut als Verschiebemedium (Frequenzumsetzer) geeignet ist z. B. für KrF $D_2$, und für XeCl $CO_2$. Mit diesem als Raman-Medium bisher noch nicht verwendeten Medium ($CO_2$) läßt sich eine Verschiebung von 308 nm auf 295 nm, also nahe an den theoretisch optimalen Bereich von 296 nm, erzielen.

Als Excimer-Laser kommen insbesondere Halogenlaser in Frage, wie z. B. ClF-Laser (284 nm) oder $Br_2$-Laser (292 nm).

Ein erfindungsgemäß verwendeter Exciplex-Laser ist insbesondere ein Xenonbromid-Laser (282 nm). Bei einem solchen Laser handelt es sich um zwei verschiedene Reaktionspartner, z. B. Edelgas und Halogen, die unter den Anregungsbedingungen ein emittierendes Molekül ergeben.

Als erfindungsgemäß zu verwendender Metalldampf-Laser mit Frequenzverdoppelung wird ein Kupferdampf-Laser bei 578 nm mit Frequenzverdoppelung bevorzugt.

Bei den erfindungsgemäß verwendeten Lasern handelt es sich zum Teil um an sich bekannte Laser (vgl. z. B. IEEE Journal of Quantum Electronics, Vol. QE-15, Nr. 5, Mai 1979, 337; (Applied Physics Letters, Vol. 28, No. 9, 530 und Vol. 32, No. 8, 479; Appl. Physics 23, 1980, 283-287)) oder aber, wie z. B. bei Raman-verschobenen Lasern unter Verwendung von $CO_2$ als Raman-Medium, um neue Lasersysteme. Diese Laser haben sich bei ihrer Anwendung auf photochemische Prävitamin D-Synthesen als überraschend gute und leistungsfähige Strahlungsquellen erwiesen.

Das Verfahren der Erfindung eignet sich in gleicher Weise zur Herstellung der hydroxylierten bzw. acylierten Prävitamin D-Derivate, z. B. von 1-Hydroxy- bzw. 25-Hydroxy oder Acyloxiprävitamin $D_3$, und von anderen Prävitamin D-Derivaten, welche die gleichen spectralen Eigenschaften aufweisen.

Im nachfolgenden Beispiel wird die Erfindung näher erläutert.

B e i s p i e l

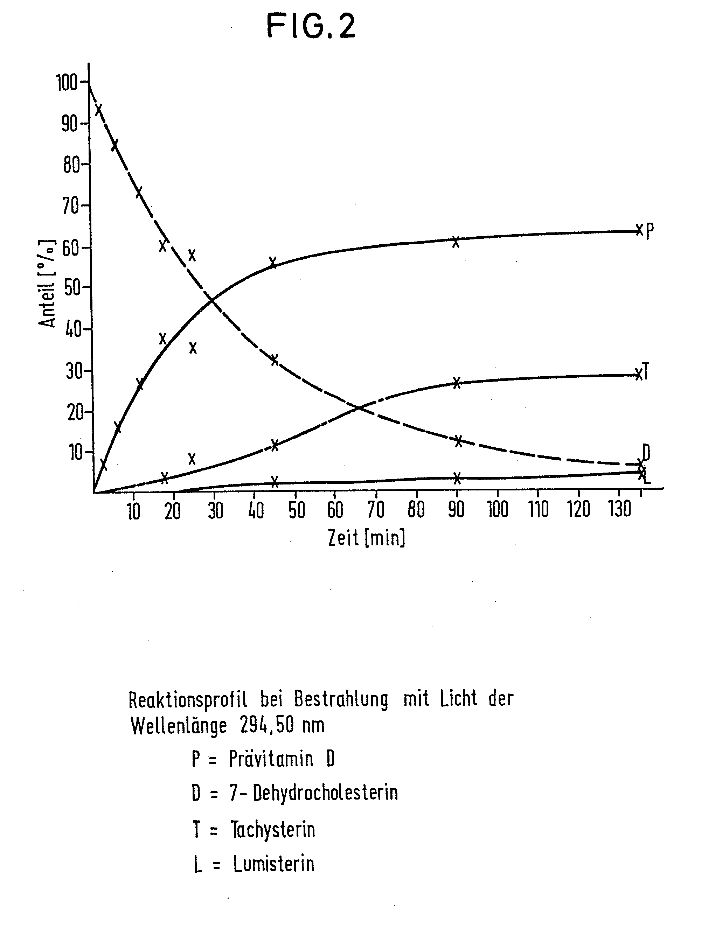

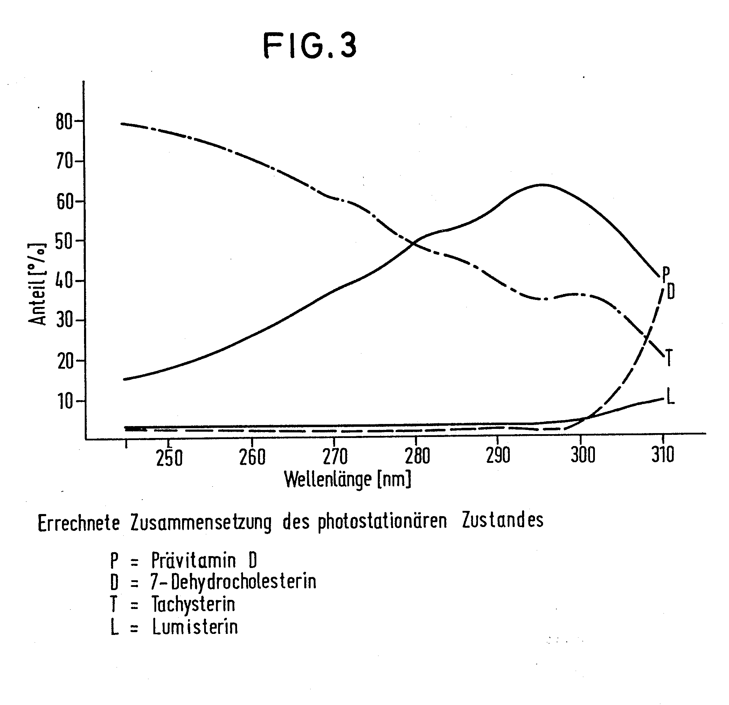

7-Dehydrocholesterin wurde in 0,5 %iger ethanolischer Lösung mit einem mehrfach anti-Stokes-Raman verschobenen Farbstofflaser mit $H_2$ als Raman-Medium bei 294,5 und 282,5 nm und zum Vergleich mit dem KrF-Laser bei 248,3 nm in einer Quarzküvette unter Luftausschluß bestrahlt. In regelmäßigen Zeitabständen wurde die Zusammensetzung durch Flüssigchromatographie bestimmt. Bei 294,5 nm (siehe Fig. 2 der Zeichnung), also nahe bei der rechnerisch günstigsten Wellenlänge von etwa 296 nm, bestehen bei etwa 50 % Umsatz über 80 % der Produkte aus dem gewünschten Prävitamin $D_3$. Das Ausgangsmaterial läßt sich nach bekannten Verfahren leicht abtrennen. Die Fortsetzung der Bestrahlung bis zum photostationären Zustand führte zu einer guten Übereinstimmung mit der berechneten Produktzusammensetzung (siehe Fig. 3 der Zeichnung). Aufgrund der erhaltenen Quantenausbeute von 27 % ist das Verfahren auch für die Anwendung in technischem Maßstab geeignet.

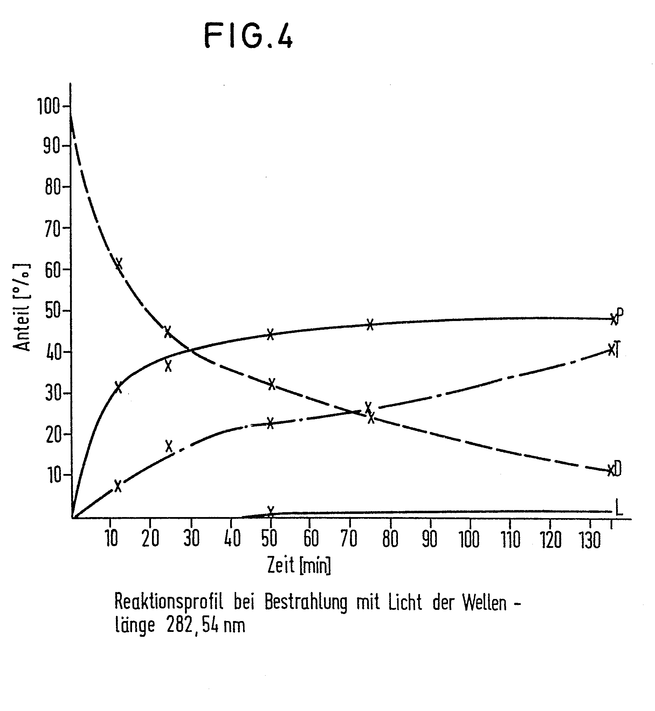

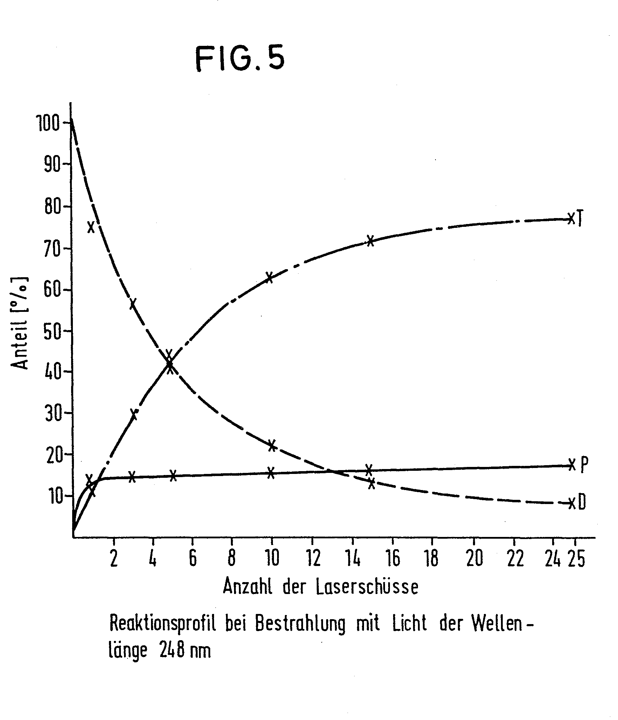

Die Fig. 4 und 5 der Zeichnung zeigen das Reaktionsprofil bei Bestrahlung mit Licht der Wellenlänge 282,5 nm bzw. 248,3 nm.

Die flüssigkeitschromatographische Analyse der Produktgemische erfolgte mit Reversed-Phase HPLC (Acetonitril/
Wasser = 98/2) an einer $C_{18}$-Säule (WATERS RCSS mit $C_{18}$-
Kartusche), der UV-Detektor arbeitete bei 266 nm.

Patentansprüche

1. Photochemisches Verfahren zur Herstellung von Prävitamin $D_2$ und $D_3$ aus Ergosterin bzw. 7-Dehydro-
cholesterin, d a d u r c h
g e k e n n z e i c h n e t , daß man als
Strahlungsquelle einen Laser verwendet, der

    (a)  ein energiereicher Laser ist, der Wellenlängen
          außerhalt des für die Prävitamin D-Synthese
          erforderlichen Bereichs besitzt, aber durch
          ein- oder mehrfache Raman-Verschiebung der
          emittierten Wellenlängen ein gepulstes Licht
          mit hohen Photonenausbeuten vom gewünschten
          Wellenlängenbereich liefert,

    (b)  ein Laser aus der Gruppe der Excimer-Laser
          ist,

    (c)  ein Laser aus der Gruppe Exciplex-Laser oder

    (d)  ein Metalldampf-Laser mit Frequenzverdoppelung ist.

2. Verfahren nach Anspruch 1, d a d u r c h  g e -
k e n n z e i c h n e t , daß man als Laser (a) Stokes-
Raman-Laser verwendet.

3. Verfahren nach Anspruch 1, d a d u r c h  g e -
k e n n z e i c h n e t , daß man als Laser (a) Anti-
Stokes-Raman-Laser verwendet.

4. Verfahren nach einem der Ansprüche 1 oder 2,
d a d u r c h  g e k e n n z e i c h n e t , daß man KrF-
oder ArF-Laser verwendet.

5. Verfahren nach Anspruch 1 oder 3, d a d u r c h
g e k e n n z e i c h n e t , daß man XeCl-Laser verwendet.

6.　　　Verfahren nach Anspruch 1, d a d u r c h　g e -
k e n n z e i c h n e t , daß man als Excimer-Laser (b)
einen Halogenlaser verwendet.

7.　　　Verfahren nach Anspruch 6, d a d u r c h　g e -
k e n n z e i c h n e t , daß man als Halogenlaser einen
ClF- oder $Br_2$-Laser verwendet.

8.　　　Verfahren nach Anspruch 1, d a d u r c h　g e -
k e n n z e i c h n e t , daß man als Exciplex-Laser einen XeBr-Laser verwendet.

9.　　　Verfahren nach Anspruch 1,　　　d a d u r c h
g e k e n n z e i c h n e t ,　　daß man als
Metalldampf-Laser mit Frequenzverdoppelung einen
Kupferdampf-Laser verwendet.

10.　　Verfahren nach einem der Ansprüche 1 bis 9,
d a d u r c h　　　g e k e n n z e i c h n e t ,
daß man die Strahlungsquelle in einem einstufigen
Verfahren (7-Dehydrocholesterin → Prävitamin D)
oder zweistufigen Verfahren (7-Dehydrocholesterin
→ Tachysterin → Prävitamin D) verwendet.

0118903

# FIG.1

Absorptionspektren von L = Lumisterin

E = Ergosterin

T = Tachysterin

P = Prävitamin D

D = Vitamin D

## FIG.2

Reaktionsprofil bei Bestrahlung mit Licht der
Wellenlänge 294,50 nm

P = Prävitamin D

D = 7-Dehydrocholesterin

T = Tachysterin

L = Lumisterin

## FIG.3

Errechnete Zusammensetzung des photostationären Zustandes

P = Prävitamin D
D = 7-Dehydrocholesterin
T = Tachysterin
L = Lumisterin

# FIG.4

Reaktionsprofil bei Bestrahlung mit Licht der Wellen -
länge 282,54 nm

# FIG.5

Reaktionsprofil bei Bestrahlung mit Licht der Wellenlänge 248 nm

Europäisches
Patentamt

**EUROPÄISCHER RECHERCHENBERICHT**

**0118903**
Nummer der Anmeldung

EP 84 10 2593

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | JOURNAL OF THE AMERICAN CHEMICAL SOCIETY, Band 103, Nr. 22, 4. November 1981, Seiten 6781-6783, Washington, D.C., US V. MALATESTA et al.: "Laser photochemical production of vitamin D" * Insgesamt * | 1 | C 07 C 172/00 B 01 J 19/12 |
| A,D | PROCEEDINGS OF THE NATIONAL ACADEMY OF SCIENCES OF THE UNITED STATES OF AMERICA, Band 79, Nr. 8, August 1982, Seiten 5115-5116, Washington, D.C., US W.G. DAUBEN et al.: "Efficient photochemical formation of 1alpha-hydroxyprevitamin D3" * Insgesamt * | 1 | |
| P,A | US-A-4 388 242 (V. MALATESTA) * Insgesamt * | 1 | RECHERCHIERTE SACHGEBIETE (Int. Cl. ³) C 07 C 172/00 B 01 J 19/00 |

Der vorliegende Recherchenbericht wurde für alle Patentansprüche erstellt.

| Recherchenort | Abschlußdatum der Recherche | Prüfer |
|---|---|---|
| DEN HAAG | 29-05-1984 | HENRY J.C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82